# EUROPEAN PATENT SPECIFICATION

(11) **EP 1 916 909 B1**
(45) Date of publication and mention of the grant of the patent: **23.04.2014**
(21) Application number: 06800841.6
(22) Date of filing: 04.08.2006
(51) Int. Cl.: A23K 1/00, A23K 1/16, A23K 1/18

(54) **DIRECT STARCH MOLDING**
DIREKTSTÄRKEFORMUNG
MOULAGE DIRECT D'AMIDON

(30) Priority: 05.08.2005 US 198881
(43) Date of publication of application: 07.05.2008
(73) Proprietor: T.F.H. Publications, Inc., Neptune City, NJ 07753 (US)
(72) Inventor: AXELROD, Glen S., Colts Neck, New Jersey 07722 (US); GAJRIA, Ajay, Monmouth Junction, New Jersey 08852 (US)
(74) Representative: Lippert, Stachow & Partner
(86) International application number: PCT/US2006/030645
(87) International publication number: WO 2007/019407

(56) References cited:
- WO-A1-2005/041683
- JP-A- 11 056 261
- US-A- 4 076 846
- US-A- 5 310 541
- US-A- 5 419 283
- US-A- 6 159 516
- US-A1- 2002 172 752
- US-A1- 2003 219 516
- US-A1- 2004 086 616
- US-A1- 2004 170 732
- US-B1- 6 455 083
- US-B1- 6 576 246

## Description

### CROSS REFERENCE TO RELATED APPLICATIONS

The present application claims the benefit of the filing date of U.S. Utility Patent Application Serial No. 11/198,881 filed August 5, 2005.

### FIELD OF INVENTION

The present invention relates to the direct injection molding of an edible starch based animal chew compositions. The processing conditions, including barrel temperatures may also be adjusted along with additive amount and water levels to provided molded starch products. The starch may include fermented soy product, enzymes and/or coenzymes.

### BACKGROUND

Numerous disclosures exist pertaining to the development of edible dog chews that are digestible and/or nutritious along with a texture that can be individually adjusted to suit a wide variety of a dog's preferences or needs. Attention is therefore directed to the following exemplary disclosures: U.S. Pat. Nos. 6,180,161 "Heat Modifiable Edible Dog Chew"; U.S. Pat. No. 6,159,516 "Method of Molding Edible Starch"; U.S. Pat. No. 6,126,978 "Edible Dog Chew"; U.S. Pat. No. 6,110,521 "Wheat and Casein Dog Chew with Modifiable Texture"; U.S. Pat. No. 6,093,441 "Heat Modifiable Peanut Dog Chew"; U.S. Pat. No. 6,093,427 "Vegetable Based Dog Chew"; U.S. Pat. No. 6,086,940 "High Starch Content Dog Chew"; U.S. Pat. No. 6,067,941 "Animal Chew"; U.S. Pat. No. 6,056,991 "Turkey and Rice Dog Chew With Modifiable Texture"; U.S. Pat. No. 5,941,197 "Carrot Based Dog Chew"; U.S. Pat. No. 5,827,565 "Process for Making an Edible Dog Chew"; U.S. Pat. No. 5,339,771 "Animal Chew Toy Containing Animal Meal"; U.S. Pat. No. 5,240,720 "Dog Chew with Modifiable Texture"; U.S. Pat. No. 5,200,212 "Dog Chew with Modifiable Texture." Attention is also directed to U.S. Pat. No. 6,165,474 entitled "Application for Patent for Nutriceutical Toy" and U.S. Pat. No. 5,419,283 entitled "Animal Chew Toy of Starch Material and Degradable Ethylene Copolymer". These disclosures provide non-limiting examples of starch based molding compositions and molding methods.

JP 11-56261 A discloses a method for producing a toy doubling as a feed for pets by injection molding at moderate pressures and temperatures, formulating gelatin and/or modified starch and water, with a plasticizer, e.g. glycerin, and mixing with at least one kind selected from vegetable fiber, fish meal and dry meat powder.

US 6,576,246 Bl describes a chewing article for pets comprising a matrix of a natural and/or synthetic polymer and a natural and/or synthetic fibrous material bonded chemically or physically to the matrix. Formation of sharp edges at breaking is thus inhibited.

US 2003/0219516 A1 discloses a method for making a pet's chew comprising preparing a mixture of starch or a starch derivative, a plasticizer and a fibrous material, converting the mixture into a thermoplastic starch and molding the thermoplastic starch.

US 2004/170732 A1 describes a method for incorporation of an additive into an edible molding composition by adding a fiber material to the additive and composition.

### Summary

The present invention relates to a method for direct injection molding raw starch in an injection molding machine to produce an animal chew. The injection molding machine includes a screw, a barrel and a mold. Raw starch, water and plasticizer are introduced directly into the barrel of the injection molding machine. The starch, plasticizer and water are mixed in the barrel to form a starch composition. The starch composition may be then be formed. The starch may contain fermented soy product, enzymes and/or coenzymes.

### Brief Description of Drawings

Features and advantages of the present invention are set forth herein by description of embodiments consistent with the present invention, which description should be considered in the conjunction with the accompanying drawings, wherein:

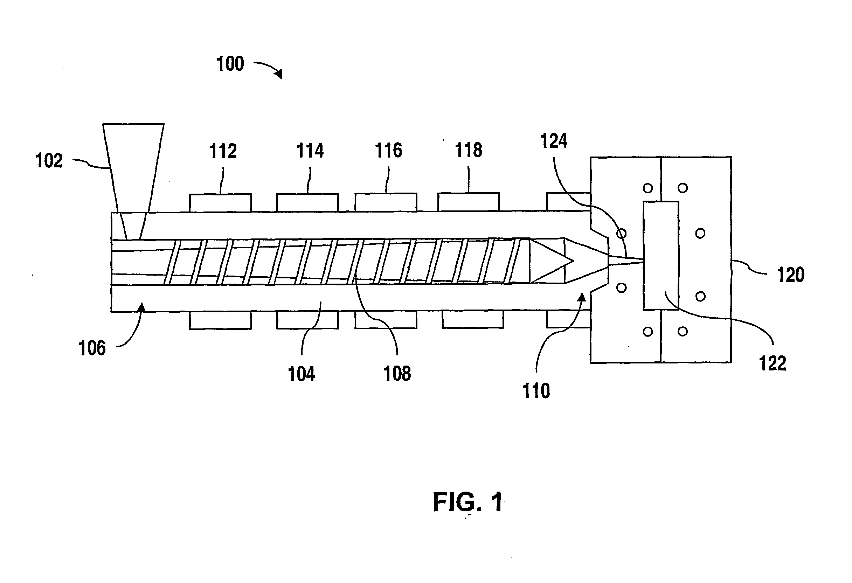

Fig. 1 is an exemplary embodiment of an injection molding machine.

### Detailed Description

The present invention relates to direct injection molding of starch based edible animal chew compositions. The additives of the starch based composition are added directly into an injection molding machine to provide a molded starch based animal chew in a single step.

The starch composition may include any carbohydrate of natural or vegetable origin. The starch may include amylose and/or amylopectin and may be extracted form plants, including but not limited to potatoes, rice, tapioca, corn and cereals such as rye, wheat, and oats. The starch may also be extracted from fruits, nuts and rhizomes, or arrowroot, guar gum, locust bean, arracacha, buckwheat, banana, barley, cassava, konjac, kudzu, oca, sago, sorghum, sweet potato, taro, yarns, fava beans, lentils and peas. The starch is present at a level greater than 50% by weight, e.g. up to 99% by weight.

The starch employed is raw starch that has not seen a prior thermal molding history, such as extrusion or other type of melt processing step. The raw starch itself is unmodified starch recovered in the original form by extraction and not physically or chemically modified. The raw starch may also be in powder form of varying particle size, which may be understood as milled and/or pre-sifted. It should be understood that the raw starch may also have varying degrees moisture present. Accordingly, it should be appreciated that the term "direct" as used herein with respect to injection molding refers to the molding of starch without exposing the starch to prior thermal molding histories before injection molding. However, the starch herein may, e.g., be heated for drying purposes, which would not amount to a prior thermal molding history.

The starch composition may include cellulose. The cellulose may be, for example, a long-chain polymer of polysaccharide carbohydrate. The cellulose may also be derived or extracted from plants. The cellulose may be incorporated into the starch composition between 1-15% by weight of the starch composition and any increment or value therebetween including 4%, 10%,11%, etc.

Emulsifiers or surfactants may also be incorporated into the starch composition. The emulsifier may be present between 1-10% by weight of the starch composition and all increments or values therebetween including 3%, 4%, etc. The emulsifier may include, for example, lecithin, which may be extracted or derived from, for example, egg yolk or soy beans.

The starch composition includes a plasticizer. The plasticizer may include for example, glycerin. The plasticizer is present at a level greater than 15% by weight of the starch composition.

A humectant may also be incorporated into the starch composition. The humectant may include, for example, oat fiber. The humectant may be incorporated between about 0.1-5% by weight of the starch composition including all intervals and values therebetween, including 1%, etc. A humectant may be understood to be any additive that may absorb water in the material.

The starch composition also includes water. After the product has been formed, the water may be present between 1-10% by weight of the starch composition including all increments or values therebetween, such as, 4%, 5-10%, etc.

The starch composition may include a nutraceutical. The nutraceutical may be fermented soya. Fermented soya nutraceuticals are available from Bio Food, Ltd., Pine Brook, N J and sold under the general trademark Soynatto®. The fermented soya may be present between 0.1-40% by weight of the starch composition, including all increments and values therbetween, including 10%, 20%, etc. The Soynatto® product is more specifically described to contain the following as compared to other available compositions

| Made With | | Foods* | | | | Constituants* | | |
|---|---|---|---|---|---|---|---|---|
| Nutrient | Units per 100g | IEFS | Soynatto® | Tempeh | Miso Paste | Soy protein isolate | Soy milk as fluid | Tofu, regular |
| **Proximates** | | | | | | | | |
| Protein | g | 37.00, | 37.00 | 18.54, | 11.81 | 80.69 | 2.75 | 8.08 |
| Total lipid | g | 7.50 | 7.50 | 10.80 | 6.07 | 3.39 | 1.91 | 4.78 |
| Carbohydrate | g | 40.00 | 40.00 | 939 | 27.96 | 7.36 | 1.81 | 1.88 |
| Fiber total dietary | g | 12 02 | 12.02 | | 5.40 | 5.60 | 1.30 | 0.30 |

| **Minerals** | | | | | | | | |
|---|---|---|---|---|---|---|---|---|
| Calcium | mg | 151.50 | 151.50 | 111.00 | 66.00 | 178.00 | 4.00 | 350.00 |
| Iron | mg | 5.21 | 5.21 | 2.70 | 2.74 | 14.50 | 0.58 | 5.36 |
| Magnesium | mg | 191.25 | 191.25 | 81.00 | 42.00 | 39.00 | 19.00 | 3000 |
| Phosphorus | mg | 608.25 | 608.25 | 266.00 | 153.00 | 776.00 | 49.00 | 97.00 |
| Potassium | mg | 1957.50 | 1957.50 | 412.00 | 164.00 | 81.00 | 141.00 | 121.00 |
| Sodium | mg | 18.30 | 18.30 | 9.00 | 3647.00 | 1005.00 | 12.00 | 7.00 |
| Zinc | mg | 3.84 | 3.84 | 1.14 | 3.32 | 4.03 | 0.23 | 0.80 |
| Copper | mg | 3.93 | 3.93 | 0 56 | 0.44 | 1.60 | 0.12 | 0.19 |
| Manganese | mg | 2.40 | 2.40 | 1.30 | 0.86 | 149 | 017 | 061 |
| selenium | mcg | 27.98 | 27.98 | 0.02 | 1.60 | 0.80 | 1.30 | 8.90 |
| Lithium | mcg | 60.00 | 6000 | tr | tr | tr | tr | tr |
| Molybdenum | mcg | 6.00 | 6.00 | tr | tr | tr | tr | tr |
| Nickel | mcg | 30.00 | 30.00 | tr | tr | tr | tr | tr |
| Tin | mcg | 12.00 | 12.00 | tr | tr | tr | tr | tr |

| **Lipids** | | | | | | | | |
|---|---|---|---|---|---|---|---|---|
| Fatty acids, saturated | g | 1.22 | 1.22 | 2.22 | 0.88 | 0.42 | 0.21 | 0.69 |
| Fatty acids, monounsaturated | g | 1.70 | 1.70 | 3.00 | 1.34 | 0.65 | 0.33 | 1.06 |
| Fatty acids, polyunsaturated | g | 4.14 | 414 | 3.83 | 3.43 | 165 | 0.83 | 2.70 |
| Omega-6 Fatty Acid | g | 3.57 | 3.57 | 3.59 | 3.02 | 1.45 | 0.74 | 2 38 |
| Omega-3 Fatty Acid | g | 0.55 | 0.55 | 0.22 | 0.41 | 0.20 | 0.10 | 0.32 |

| **Vitamins** | | | | | | | | |
|---|---|---|---|---|---|---|---|---|
| Thiamin | mg | 1.79 | 1.79 | 0.08 | 0.10 | 0.18 | 0.16 | 0.08 |
| Riboflavin | mg | 1.04 | 1.04 | 0.36 | 0.25 | 0.10 | 007 | 0.05 |
| Niacin | mg | 7.62 | 7.62 | 2 64 | 0.86 | 1.44 | 0.15 | 020 |
| Pantothenic acid | mg | 2.34 | 2.34 | 0.28 | 0.26 | 0.06 | 0.05 | 0.07 |
| Witamin B-6 | mg | 0.99 | 0.99 | 022 | 0.22 | 0.10 | 004 | 0.05 |
| frolic | mcg | 532 50 | 532.50 | 23.90 | 33.00 | 176.10 | 1.50 | 15.00 |
| Vitamin A | IU | 30.00 | 30.00 | 0.00 | 87.00 | 0.00 | 3200 | 85.00 |
| Vitamin E | mg_ATE | 0.15, | 0.15 | tr | 0.01 | 0.00 | 0.01 | tr |
| Biotin | mg | 0.02 | 002 | tr | tr | tr | tr | tr |
| Choline | mg | 6000 | 60.00 | tr | tr | tr | tr | tr |
| Inositol | mg | 72.00, | 72.00 | tr | tr | tr | tr | tr |
| PABA | mg | 600 | 6.00 | tr | tr | tr | tr | tr |

| **Special Nutrients** | | | | | | | | |
|---|---|---|---|---|---|---|---|---|
| Isoflavones | mg | 4000.00 | 200.00 | 43.52 | 42.55 | 97.43 | 9 65 | 2361 |
| Glycogen | g | 1.10 | 1.10 | tr | tr | tr | tr | tr |
| Beta Glucans | g | 0.50 | 0.50 | tr | tr | tr | tr | tr |
| Gluitadnone | mg | 60.00 | 60.00 | tr | tr | tr | tr | tr |
| SOD | unit | 1650.00 | 1650.00 | tr | tr | tr | tr | tr |
| RNA/DNA | g | 1.05 | 105 | | | | | |
| An Empty Cell indicates a value is un-known, "tr" indicates a value is probably a trace or none | | | | | | | | |

As can be seen from the above, the Soynatto® product may provide proteins, minerals, and vitamins, in a fermented soy form. The fermentation process may infuse the product with saccharomyces cerevisiae, commonly known as "bakers yeast" or "brewers yeast." Saccharomyces cerevisiae is more traditionally known to ferment sugars present in flour or dough, yielding carbon dioxide and alcohol. Accordingly, it should be appreciated that a protein, one or more of a mineral, and one or more of a vitamin, along with saccharomyces cerevisiae may be present in the starch composition.

The fermented soy product herein may include increased concentrations of glycitein, daidzein and genistein, reportedly present at several hundred percent more than other more common soyfood sources. Glycitein, daidzein and genistein belong to the isoflavone class of flavanoids and may be classified as phytoestrogen, since they are plant derived nonsteriodal compounds that contain estrogen-like biological activity.

In the context of the present invention, the direct injection molding of the fermented soy product may offer advantages with respect to the activity of the soy product in a final molded shape. Specifically, the direct injection molding provides that the fermented soy product is not substantially degraded and the nutritional value of the fermented soy product remains substantially unchanged.

The starch composition may also include enzymes and/or co-enzymes which are similarly available through Bio Foods, Ltd., Pine Brook, N.J. and sold under the trademark of BT-CoQ10®. This reportedly is a biologically transformed (fermented) cell mitochondrial coenzyme and contains Coenzyme Q10, antioxidants, phytonetrients and cofactor mineral nutrients and other cell constituents. The enzymes and/or co-enzymes may be present between 0.1-10% by weight of the starch composition, including all increments and values therebetween such as 1%, 5%, etc.

Reportedly, the coenzyme Q10 is a fat-soluble compound primarily synthesized by the body and also consumed in the diet and is required for mitochondrial ATP synthesis. The fermented coenzyme also reportedly belongs to the family of compounds known as ubiquinones, which are either of two isomeric cyclic crystalline compounds C₆H₄O₂ that are di-keto derivatives of dihydro-benzene. It may also function as an antioxidant in cell membranes and lipoproteins.

Other additives may be introduced into the composition as well. These additives may include vegetable matter, fruit matter, rawhide, nuts, nut bits or nut flour such as peanut flour, and animal or fish products, by-products, meal or digests, etc. Glutens may also be incorporated into the starch composition. Gluten may be understood as water-insoluble protein complex extracted from cereal grains such as maize or corn and wheat. These additives may be present individually or cumulatively between 0.1-25% by weight of the starch composition and all increments and values therebetween including 0.1-5.0%, 15%, 25%, etc. Gluten, fermented soy product, and combinations thereof may be present between 0.1 to 40% by weight of the starch composition.

Additionally, flavorants, herbs, herbal extracts, vitamins, minerals, colorants, yeast products, soy products, attractants, etc, may be incorporated into the starch composition. Yeast products may include nutritional yeast or brewers yeast such as saccharomyces cerevisiae, dairy yeast such as kluyveromyce marxianus or wine yeast such as saccharomyces fermentati. The soy products may include fermented soy or other soy products, as listed in the table above. Attractants may include compounds listed herein, such as the animal or fish digests, or other compounds that may increase an animal's interest in the starch composition. These additives may be present individually or cumulatively between 0.1-25% by weight of the starch composition and any increment or value therebetween including 0.5%, 10%, 20%, etc. The composition may also include calcium carbonate. The calcium carbonate may be present between 5-10%.

The additives of the starch composition may be introduced directly into the barrel of an injection molding machine **100,** illustrated in **FIG. 1**, through a hopper or other feeding device **102**. Various feeding devices for introducing the additives into the injection molding barrel may be contemplated including loss-in weight gravimetric blenders/feeders, auger feeders, venturi loaders, etc. Those skilled in the art will appreciate that an injection molding machine **100** typically contains a barrel **104** including a feed section **106**, a screw **108** and an output nozzle **110**. The barrel **104** may include a plurality of temperature control zones **112**, **114,116, 18** in the barrel extending from the feed sction **106** section to the nozzle **110**. The injection molding machine may include a mold **120** having one or more cavities **122**. The molding machine may also be vented, including a vented barrel and/or a vented mold.

The temperature adjustment may vary for each zone. For example, in one exemplary embodiment, the molding machine barrel may include 4 zones, zone **1 112** being the closest to the feed section **106** and zone **4 118** being the closest to the nozzle **110.** Zone **1 112** may be set to less than 66°C, including any increment or value between about 2 to 66°C including between 8 to 66°C, 8 to 21°C, etc. Similarly zone 2 **114** may be set between 21 to 66°C including any increment or value therebetween, zone **3 116** between 10 to 149°C including any increment or value therebetween, and zone 4 **118** between 93 to 191 °C including any increment or value therebetween. The nozzle **110** may be set between about 121 to 199 °C including any increment or value therebetween. The bushing **124** inside of the mold **120** may be set between 121 to 218 °C including any increment or value therebetween and the mold **120** may also be set between 2 to 18 °C including any increment or value therebetween.

Once introduced into the barrel **104** of the molding machine **100** the additives may be blended as the screw **108** conveys the material towards the mold **120** where the starch composition may be formed. The mold **120** may cool the starch composition. Once molded, and venting takes place, the starch composition may include water between 1-10% by weight of the starch composition, including all increments and values therebetween such as 10%, 15%, etc. The starch composition may be molded into any form capable of being produced in an injection molding cavity.

The foregoing description is provided to illustrate and explain the present invention. However, the description hereinabove should not be considered to limit the scope of the invention set forth in the claims appended here to.

## Claims

1. A method for direct injection molding raw starch In an injection molding machine including a screw, a barrel and a mold to produce an animal chew, comprising:
introducing raw starch, plasticizer, and water directly into the barrel of the injection molding machine,
wherein said raw_starch is present at a level greater than 50% by weight, wherein said raw starch has not seen a prior thermal molding history including extrusion or any melt processing step, and wherein said raw starch is unmodified starch recovered by extraction and which has not been physically or chemically modified, and
wherein said plasticizer is present a level greater than 15% by weight;
mixing said starch, said plasticizer and said water in said barrel to form a starch composition,
forming said starch composition into a molded shape.

2. The method of claim 1 wherein said step of introducing said starch, said plasticizer and said water directly into the barrel of the injection molding machine further comprises including an additive.

3. The method of claim 1 wherein said plasticizer comprises glycerin.

4. The method of claim 2 wherein said additive is selected from the group consisting of emulsifiers, cellulose and combinations thereof.

5. The method of claim 4 wherein said emulsifier comprises lecithin.

6. The method of claim 4 wherein in said starch composition said starch is present between 50 - 99% by weight of the starch composition, said water is present between 1 - 10% by weight of the starch composition, said cellulose is present between 1 - 15% by weight of the starch composition, said emulsifiers are present between 1 - 10% by weight of the starch composition and said plasticizer is present above 15% by weight of the starch composition.

7. The method of claim 2 wherein said additive is selected form the group consisting of humectants, vegetable matter, fruit matter, animal products, animal by-products, animal digests, animal meal, fish products, fish by-products, fish digests, fish meal, rawhide, nuts, nut bits, nut flour, flavorants, attractants, herbs, herbal extracts, vitamins, minerals colorants, yeast products, soy products, calcium carbonate and combinations thereof.

8. The method of claim 7 wherein said additive is present between 0,1 to 25% by weight of said starch composition.

9. The method of claim 2 wherein said additive is selected from the group consisting of gluten, fermented soy products and combinations thereof.

10. The method of claim 9 wherein said additive is present between 0,1 to 40% by weight of said starch composition.

11. The method of claim 2 wherein said additive comprises enzymes/coenzymes.

12. The method of claim 11 wherein said additive is present between 0,1 - 10% by weight of said starch composition.

13. The method of claim 1 wherein said barrel further includes a feed section and a nozzle including a plurality of temperature control zones in said barrel extending from said feed section to said nozzle.

14. The method of claim 13 wherein said barrel adjacent to said feed section is maintained at a temperature less than 66 °C (150 °F).

15. The method of claim 13 wherein said plurality of temperature control zones in said barrel are set within the following temperature ranges:
zone 1 is set between 2 to 66 °C (35 to 150 °F),
zone 2 is set between 21 to 66 °C (70 to 150 °F),
zone 3 is set between 10 to 149 °C (50-300 °F), and
zone 4 is set between 93 to 191°C (200 to 375 °F).

## Patentansprüche

1. Verfahren zum Direkteinspritzgießen von unbehandelter Stärke in einer Spritzgießmaschine mit einer Schnecke, einem Zylinder und einer Form zur Herstellung eines Kauartikels für Tiere, umfassend
- Eintragen von unbehandelter Stärke, Weichmacher und Wasser unmittelbar in den Zylinder der Spritzgießmaschine,
- wobei die unbehandelte Stärke mit einem Gehalt von mehr als 50 Gewichtsprozent vorhanden ist, wobei die unbehandelte Stärke zuvor keine thermische Formgebung, einschließlich Extrusion oder jeglicher Schmelzverarbeitung, erfahren hat und wobei die unbehandelte Stärke unmodifizierte Stärke ist, welche durch Extraktion gewonnen wurde und welche nicht physikalisch oder chemisch modifiziert wurde, und
- wobei der Weichmacher mit einem Gehalt von mehr als 15 Gewichtsprozent vorhanden ist,
- Mischen der Stärke, des Weichmachers und des Wassers im Zylinder unter Bildung einer Stärkezusammensetzung,
- Formen der Stärkezusammensetzung zu einem geformten Gebilde.

2. Verfahren nach Anspruch 1, wobei der Schritt Eintragen von unbehandelter Stärke, Weichmacher und Wasser unmittelbar in den Zylinder der Spritzgießmaschine ferner das Zusetzen eines Additivs umfasst.

3. Verfahren nach Abschnitt 1, wobei der Weichmacher Glyzerin umfasst.

4. Verfahren nach Anspruch 2, wobei das Additiv aus der aus Emulgatoren, Zellulose und deren Kombinationen bestehenden Gruppe ausgewählt ist.

5. Verfahren nach Anspruch 4, wobei der Emulgator Lecithin umfasst.

6. Verfahren nach Anspruch 4, wobei die Stärke in der Stärkezusammensetzung mit zwischen 50-99 % des Gewichts der Stärkenzusammensetzung vorhanden ist, das Wasser mit zwischen 1-10 % des Gewichts der Stärkezusammensetzung vorhanden ist, die Zellulose mit zwischen 1-15 % des Gewichts der Stärkezusammensetzung vorhanden ist, die Emulgatoren mit zwischen 1-10 % des Gewichts der Stärkezusammensetzung vorhanden sind und der Weichmacher mit über 15 % des Gewichts der Stärkezusammensetzung vorhanden ist.

7. Verfahren nach Anspruch 2, wobei das Additiv aus der aus Feuchthaltemitteln, pflanzlichem Material, Fruchtmaterial, Tierprodukten, Tierabfällen, Tierextrakten, Tiermehl, Fischprodukten, Fischabfällen, Fischextrakten, Fischmehl, Rohhaut, Nüssen, Nussstücken, Nussmehl, Geschmacksstoffen, Lockmitteln, Kräutern, Kräuterauszügen, Vitaminen, Mineralfarbstoffen, Hefeprodukten, Sojaprodukten, Calciumcarbonat und Kombinationen aus diesen bestehenden Gruppe ausgewählt ist.

8. Verfahren nach Anspruch 7, wobei das Additiv mit zwischen 0,1 bis 25 % des Gewichts der Stärkezusammensetzung vorhanden ist.

9. Verfahren nach Anspruch 2, wobei das Additiv aus der aus Gluten, fermentierten Sojaprodukten und Kombinationen aus diesen gebildeten Gruppe ausgewählt ist.

10. Verfahren nach Anspruch 9, wobei das Additiv mit zwischen 0,1 bis 40 % des Gewichts der Stärkezusammensetzung vorhanden ist.

11. Verfahren nach Anspruch 2, wobei das Additiv Enzyme/Koenzyme umfasst.

12. Verfahren nach Anspruch 11, wobei das Additiv mit zwischen 0,1-10 % des Gewichts der Stärkezusammensetzung vorhanden ist.

13. Verfahren nach Anspruch 1, wobei der Zylinder ferner einen Einzugsabschnitt und eine Düse umfasst, einschließlich einer Mehrzahl von Temperaturregelzonen im Zylinder, die sich vom Einzugsabschnitt zur Düse erstrecken.

14. Verfahren nach Anspruch 13, wobei der Zylinder angrenzend zum Einzugsabschnitt auf einer Temperatur von weniger als 66 °C (150 °F) gehalten wird.

15. Verfahren nach Anspruch 13, wobei die Mehrzahl von Temperaturregelzonen im Zylinder in den folgenden Temperaturbereichen eingestellt sind:
Zone 1 ist eingestellt zwischen 2 und 66 °C (35 bis 150 °F),
Zone 2 ist eingestellt zwischen 21 und 66 °C (70 bis 150 °F),
Zone 3 ist eingestellt zwischen 10 und 149 °C (50 bis 300 °F) und
Zone 4 ist eingestellt zwischen 93 und 191 °C (200 bis 375 °F).

## Revendications

1. Procédé de moulage directe d'amidon dans une machine de moulage par injection directe comprenant une volute, un cylindre et un moule pour fabriquer un produit à mâchonner pour animaux, le procédé comprenant l'étape d'introduire directement dans le cylindre de la machine de moulage par injection de l'amidon cru, du plastifiant et de l'eau,
l'amidon cru étant présent à un amont supérieur à 50% en poids, l'amidon cru n'ayant pas été subit à une histoire de moulage thermique antérieure incluant une extrusion ou une étape de traitement par fusion, et l'amidon cru étant un amidon non-modifié récupéré par l'extraction et un amidon non-modifié physiquement ou chimiquement, et
le plastifiant étant présent à un amont supérieur à 15% en poids;
l'étape de mélanger l'amidon, le plastifiant et l'eau dans ledit cylindre pour obtenir une composition d'amidon, et
l'étape de modeler ladite composition en une forme moulée.

2. Procédé selon la revendication 1, dans lequel l'étape d'introduire ledit amidon, ledit plastifiant et ladite eau directement dans le cylindre de la machine de moulage par injection comprend en outre l'inclusion d'un additif.

3. Procédé selon la revendication 1, dans lequel le plastifiant contient de la glycérine.

4. Procédé selon la revendication 2, dans lequel l'additif est choisi du groupe consistant en émulsifiants, la cellulose et combinaisons d'eux.

5. Procédé selon la revendication 4, dans lequel l'émulsifiant contient de la lécithine.

6. Procédé selon la revendication 5, dans lequel l'amidon dans la composition d'amidon est présent à un pourcentage d'entre 50-99% en poids de la composition d'amidon, l'eau est présente à un pourcentage d'entre 1-10% en poids de la composition d'amidon, la cellulose est présent à un pourcentage de 1-15% en poids de la composition d'amidon, les émulsifiants sont présentes à un pourcentage d'entre 1-10% en poids de la composition d'amidon et le plastifiant et présent à un pourcentage supérieur à 15% en poids de la composition d'amidon.

7. Procédé selon la revendication 2, dans lequel l'additif est choisi du groupe consistant en humectants, matière végétale, matière de fruits, produits animaux, sous-produits animaux, abats d'animaux, farine animale, produits de poisson, sous-produits de poisson, abats de poisson, farine de poisson, cuir brut, noix, petits morceaux de noix, farine de noix, parfums, matières attirantes, herbes, extraits d'herbes, vitamines, colorants minéraux, produits de levure, produits de soja, le carbonate de calcium et combinaisons d'eux.

8. Procédé selon la revendication 7, dans lequel l'additif est présent à un pourcentage d'entre 0,1 à 25% en poids de la composition d'amidon.

9. Procédé selon la revendication 2, dans lequel l'additif est choisi du group consistant en gluten, produits de soja fermentés et combinaisons d'eux.

10. Procédé selon la revendication 9, dans lequel l'additif est présent à un pourcentage d'entre 0,1 à 40% en poids de la composition d'amidon.

11. Procédé selon la revendication 2, dans lequel l'additif comprend des enzymes/coenzymes.

12. Procédé selon la revendication 11, dans lequel l'additif est présent à un pourcentage d'entre 0,1-10% en poids de la composition d'amidon.

13. Procédé selon la revendication 1, dans lequel le cylindre comporte en outre une section d'alimentation et une tuyère incluant une pluralité de zones de commande de température dans ledit cylindre et s'étendant de la section d'alimentation jusqu'à ladite tuyère.

14. Procédé selon la revendication 13, dans lequel ledit cylindre adjacent à la zone d'alimentation est maintenu à une température inférieure à 66°C (150°F).

15. Procédé selon la revendication 13, dans lequel ladite pluralité de zones de commande de température dans ledit cylindre sont fixées dans les gammes de température suivantes:
la zone 1 est fixée entre 2 à 66°C (35 à 150°F),
la zone 2 est fixée entre 21 à 66°C (70 à 150°F),
la zone 3 est fixée entre 10 à 149°C (50-300°F) et
la zone 4 est fixée entre 93 à 191°C (200 à 375°F).
